# EUROPÄISCHE PATENTSCHRIFT

(11) **EP 2 001 741 B1**
(45) Veröffentlichungstag und Bekanntmachung des Hinweises auf die Patenterteilung: **08.08.2012**
(21) Anmeldenummer: 07703124.3
(22) Anmeldetag: 30.01.2007
(51) Int. Cl.: B64D 11/06, A47C 31/02

(54) **SITZVORRICHTUNG**
SEAT
SIEGE

(30) Priorität: 31.03.2006 DE 102006015515
(43) Veröffentlichungstag der Anmeldung: 17.12.2008
(73) Patentinhaber: Recaro Aircraft Seating GmbH & Co. KG, 74523 Schwäbisch Hall (DE)
(72) Erfinder: GUTTROPF, Roland, 74585 Rot am See (DE)
(74) Vertreter: Daub, Thomas
(86) Internationale Anmeldenummer: PCT/EP2007/000769
(87) Internationale Veröffentlichungsnummer: WO 2007/118530

(56) Entgegenhaltungen:
- DE-A1- 19 616 051
- FR-A- 2 828 145
- GB-A- 1 176 032
- US-A- 4 834 451
- US-A- 5 485 976
- US-B1- 6 499 801

## Beschreibung

### Stand der Technik

Die Erfindung geht aus von einer Sitzvorrichtung nach dem Oberbegriff des Anspruchs 1, wie z.B. die US5485976 offenbart.

Es ist bereits eine Sitzvorrichtung mit einer von einem Sitzboden gebildeten Sitzkomponente und mit einer Befestigungseinheit zur Befestigung der Sitzkomponente an Tragrohren bekannt. Die Befestigungseinheit weist von Schlauchschellen gebildete Befestigungsmittel auf, mittels der die Sitzkomponente an den Tragrohren befestigt wird.

Der Erfindung liegt insbesondere die Aufgabe zugrunde, die Montierbarkeit und Demontierbarkeit zu verbessern. Sie wird gemäß der Erfindung jeweils durch die Merkmale der unabhängigen Patentansprüche gelöst. Weitere Ausgestaltungen ergeben sich aus den Unteransprüchen.

### Vorteile der Erfindung

Die Erfindung betrifft eine Sitzvorrichtung mit allen Merkmalen des Anspruchs 1.

Die Erfindung geht aus von einer Sitzvorrichtung, insbesondere einer Flugzeugsitzvorrichtung, mit wenigstens einer Sitzkomponente und einer Befestigungseinheit zum Befestigen der Sitzkomponente.

Es wird vorgeschlagen, dass die Befestigungseinheit wenigstens ein Befestigungsmittel mit wenigstens einem Rastmittel aufweist, das zur Befestigung der Sitzkomponente vorgesehen ist, wodurch eine besonders einfache, schnell durchzuführende und werkzeuglose Montage und Demontage erreichbar ist. Dabei soll unter "vorgesehen" insbesondere speziell ausgestattet und oder ausgelegt verstanden werden. Untere einem "Rastmittel" soll insbesondere ein Mittel verstanden werden, das dazu vorgesehen ist, gegen eine elastische Spannkraft ausgelenkt zu werden, um dann anschließend angetrieben durch die elastische Spannkraft in seine Raststellung bewegt zu werden. Die elastische Spannkraft kann dabei von einem zusätzlichen Federelement gebildet sein und/oder kann vorteilhaft einstückig mit einem Rastarm und/oder Rasthaken ausführt sein. Ferner soll unter einer Sitzkomponente insbesondere eine Hauptkomponente eines Sitzes verstanden werden, wie eine Rückenlehne, eine Beinauflage und/oder besonders vorteilhaft ein Sitzboden.

In einer weiteren Ausgestaltung der Erfindung wird vorgeschlagen, dass im montierten Zustand das Befestigungsmittel mittels des Rastmittels an der Sitzkomponente befestigt ist, wodurch das Befestigungsmittel und die Sitzkomponente bezüglich ihres Materials jeweils besonders vorteilhaft auf unter-schiedliche Anforderungen abgestimmt werden können. Ferner ist eine flexible Anordnung des Befestigungsmittels an der Sitzkomponente erreichbar. Es ist jedoch auch denkbar, dass das Befestigungsmittel mit dem Rastmittel zumindest teilweise einstückig an die Sitzkomponente angeformt ist, insbesondere auch in einem Mehrkomponentenverfahren, wodurch zusätzliche Bauteile, Montageaufwand und Kosten eingespart werden können.

Ferner wird vorgeschlagen, dass wenigstens ein Rastmittel des Befestigungsmittels dazu vorgesehen ist, eine Rastverbindung zwischen dem Befestigungsmittel und einem Korrespondenzbauteil herzustellen, wodurch wiederum das Korrespondenzbauteil und das Befestigungsbauteil weitgehend unabhängig, insbesondere im Hinblick auf die Materialwahl, auf unterschiedliche Anforderungen ausgelegt werden können. Jedoch wäre auch hier denkbar, dass das Befestigungsmittel an einem Korrespondenzbauteil, das insbesondere von einem Trägerbauteil zur Aufnahme von Abstützkräften der Sitzkomponente gebildet ist, zumindest teilweise einstückig angeformt ist, wie insbesondere mit einem Mehrkomponentenverfahren.

Das Befestigungsmittel kann aus verschiedenen, dem Fachmann als sinnvoll erscheinenden Materialien hergestellt sein, wie insbesondere aus Metall, einem Kohlefaserstoff und/oder besonders vorteilhaft aus einem Kunststoff, wodurch dieses besonders leicht, kostengünstig und auch konstruktiv einfach mit einer gewünschten Spannkraft ausgeführt werden kann.

In einer weiteren Ausgestaltung der Erfindung wird vorgeschlagen, dass die Sitzvorrichtung eine Befestigungseinheit zur Befestigung einer Polstereinheit umfasst, wobei die Befestigungseinheit der Sitzkomponente eine Demontagekraft in wenigstens eine Hauptdemontagerichtung der Sitzkomponente erfordert, die um mindestens 20%, vorzugsweise um mindestens 40% und besonders bevorzugt um mindestens 50% größer ist als eine erforderliche Demontagekraft in wenigstens eine Hauptdemontagerichtung der Befestigungseinheit der Polstereinheit, wodurch ein unerwünschtes Lösen der Befestigungseinheit zur Befestigung der Sitzkomponente bei einer Demontage der Polstereinheit sicher verhindert werden kann. Hierzu wird insbesondere das Rastmittel entsprechend ausgelegt, und zwar insbesondere im Hinblick auf seine Form, Materialstärke und/oder Materialart. Unter einer "Hauptdemontagerichtung" soll dabei insbesondere eine vorgegebene Demontagerichtung verstanden werden, beispielsweise eine von einer Bedienungsanleitung vorgegebene Demontagerichtung, und/oder eine von einem Bediener hauptsächlich genutzte Demontagerichtung, wobei die Hauptdemontagerichtung der Sitzkomponente insbesondere eine relativ zur Sitzkomponente feste Ausrichtung aufweist.

Ferner kann ein unerwünschtes Lösen vorteilhaft vermieden werden, indem die Befestigungseinheit zumindest zwei Befestigungsmittel aufweist, die im montierten Zustand differierende Hauptdemontagerichtungen aufweisen d.h. insbesondere Hauptdemontagerichtungen, die einen Winkel ungleich Null einschließen, so dass insbesondere eine zusammengesetzte Demontagebewegung resultiert, wie insbesondere eine Demontagebewegung mit mehreren translatorischen Bewegungen in unterschiedlichen Richtungen und/oder mit wenigstens einer translatorischen Bewegung und einer Schwenkbewegung und/oder zumindest zwei Schwenkbewegungen um differierende Schwenkachsen. Weist die Befestigungseinheit zumindest zwei baugleiche Befestigungsmittel auf, können die Teilevielzahl und Kosten reduziert und Fehlmontagen durch Verwechslung differierender Befestigungsmittel können verhindert werden.

Weist das Befestigungsmittel zumindest zwei einen C-förmigen Aufnahmebereich bildende Rastarme auf, kann ein vorteilhafter Halt, insbesondere an Tragrohren, erreicht werden.

Ferner wird vorgeschlagen, dass das Befestigungsmittel zumindest einen widerhakenförmigen Rastarm aufweist, wodurch konstruktiv einfach ein sicherer Halt erreicht werden kann.

Weist die Sitzkomponente zumindest eine Rastausnehmung auf, kann die Sitzkomponente konstruktiv einfach und kostengünstig, insbesondere ohne Rastarme, realisiert werden. Denkbar ist jedoch, auch Rastarme an die Sitzkomponente anzuformen und/oder an dieser zu befestigten.

In einer weiteren Ausgestaltung der Erfindung wird vorgeschlagen, dass die Sitzvorrichtung wenigstens ein zumindest im montierten Zustand am Befestigungsmittel angeordnetes Mittel aufweist, das einen höheren Reibwert, insbesondere Haftreibwert, aufweist als ein Grundkörper des Befestigungsmittels, wodurch ein unerwünschtes Verrutschen und Vibrationsgeräusche vermieden werden können. Das Mittel mit dem höheren Reibwert kann dabei von einem zusätzlich zu montierenden Bauteil gebildet sein oder es kann an das Befestigungsmittel angeformt sein, beispielsweise in einem Mehrkomponentenspritzverfahren. Zudem ist denkbar, ein Korrespondenzbauteil, wie insbesondere ein Tragrohr, mit einem entsprechenden Mittel zu versehen.

Ferner wird vorgeschlagen, dass die Sitzvorrichtung wenigstens ein Sicherungsmittel aufweist, das dazu vorgesehen ist, wenigstens ein Rastmittel in seiner Raststellung zu halten. Das Sicherungsmittel wird vorzugsweise von einem zum Rastmittel getrennten Bauteil gebildet, kann jedoch auch wiederum an das Rastmittel und/oder an die Sitzkomponente angeformt sein und beispielsweise über ein Filmscharnier mit diesem verbunden sein, wodurch dieses verliersicher am Befestigungsmittel oder an der Sitzkomponente gehalten werden könnte. Durch ein entsprechendes Sicherungsmittel kann ein unerwünschtes Lösen einer Rastverbindung sicher vermieden werden, und zwar insbesondere, wenn das Sicherungsmittel selbst wenigstens ein Rastmittel aufweist, über welches das Sicherungsmittel wiederum in seiner Sicherungsstellung gesichert werden kann.

Die erfindungsgemäße Lösung eignet sich bei sämtlichen, dem Fachmann als sinnvoll erscheinenden Sitzen, wie bei Sitzen für Reisebusse, Schiffsfähren, Säle, Kongresshallen, jedoch vorteilhaft bei Fahrzeugsitzen und besonders vorteilhaft bei Flugzeugsitzen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Flugzeugsitzvorrichtung in einer Ansicht schräg von unten,
- Fig. 2: einen Querschnitt durch die Flugzeugsitzvorrichtung gemäß Figur 1 in montiertem Zustand an zwei Tragrohren,
- Fig. 3: eine Sitzkomponente der Flugzeugsitzvorrichtung schräg von oben,
- Fig. 4: ein Befestigungsmittel einer Befestigungseinheit der Flugzeugsitzvorrichtung aus Figur 1 schräg von der Seite,
- Fig. 5: das Befestigungsmittel aus Figur 4 mit einem Sicherungsmittel in einer Seitenansicht und
- Fig. 6: einen vergrößerten Ausschnitt aus Figur 5 nach einer Montage des Sicherungsmittels.

### Beschreibung des Ausführungsbeispiels

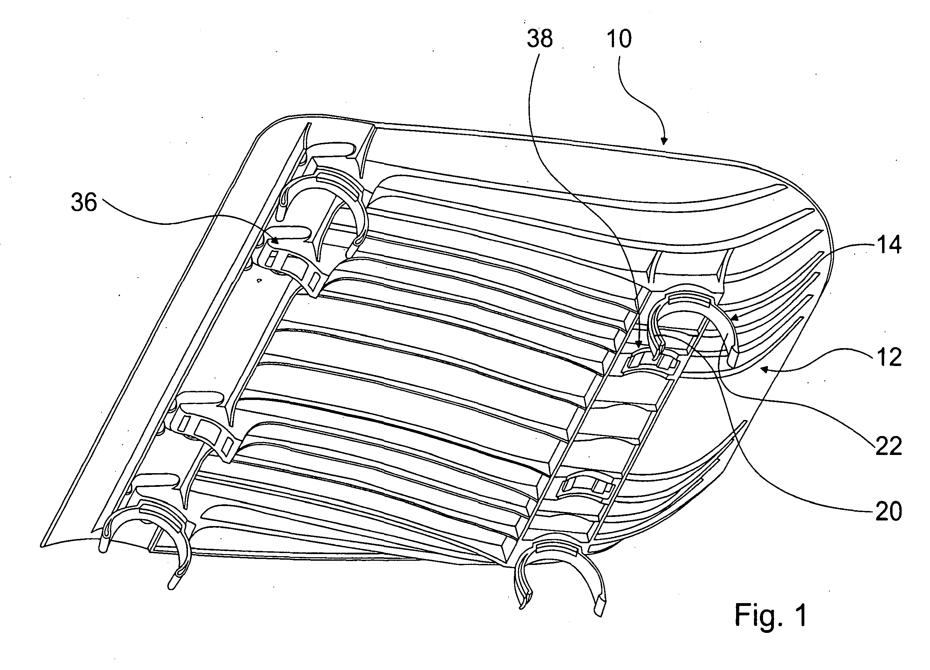

Figur 1 zeigt eine erfindungsgemäße Flugzeugsitzvorrichtung in einer Ansicht schräg von unten mit einer von einem Sitzboden gebildeten Sitzkomponente 10 und einer Befestigungseinheit 12 zum Befestigen der Sitzkomponente 10. Die Befestigungseinheit 12 umfasst vier baugleiche Befestigungsmittel 14, die jeweils vier Rastmittel 16, 18, 20, 22 aufweisen, die zur Befestigung der Sitzkomponente 10 vorgesehen sind.

Das Befestigungsmittel 14 ist im montierten Zustand mittels der von widerhakenförmigen Rastarmen gebildeten Rastmitteln 16, 18 in Rastausnehmungen 36 bzw. 38 der Sitzkomponente 10 befestigt, während das Befestigungsmittel 14 im montierten Zustand mittels der Rastmittel 20, 22 an einem von einem Tragrohr gebildeten Korrespondenzbauteil 50 bzw. 52 befestigt ist (Figuren 1, 2 und 4 bis 6). Die Rastmittel 20, 22 sind von Rastarmen gebildet, die einen C-förmigen Aufnahmebereich für das Tragrohr bilden.

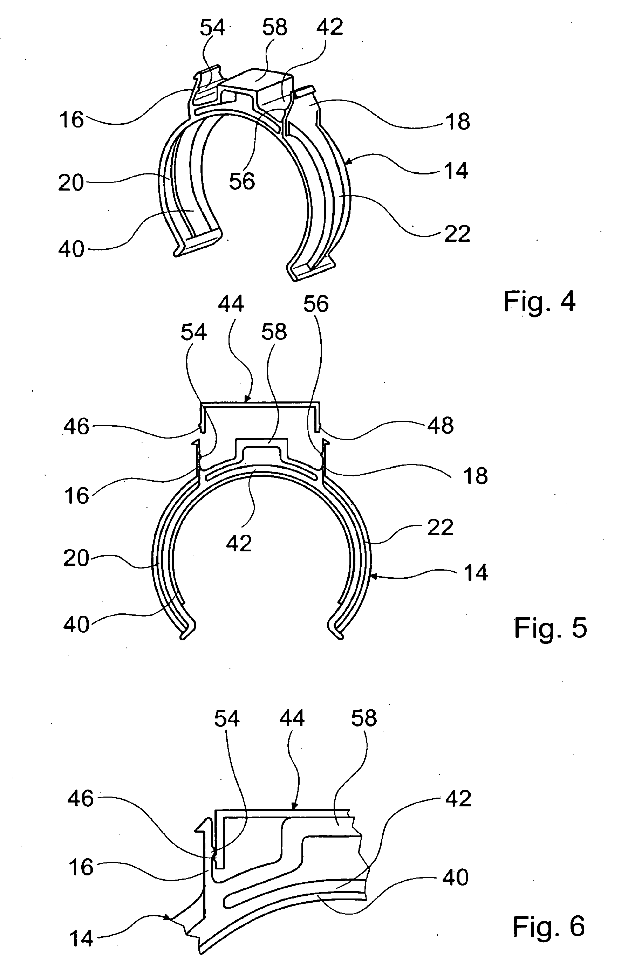

Das Befestigungsmittel 14 ist in einem Zweikomponentenspritzverfahren hergestellt, und zwar weist das Befestigungsmittel 14 einen Grundkörper 42 aus einem ersten Kunststoff und ein im Zweikomponentenspritzverfahren angeformtes Mittel 40 auf einer Innenseite der die Rastmittel 20, 22, bildenden Rastarme aus einem zweiten gummiähnlichen Kunststoff auf, das einen höheren Reibwert zu den Tragrohren aufweist als der Grundkörper 42 des Befestigungsmittels 14 (Figuren 4, 5 und 6). Durch das Mittel 40 wird vorteilhaft ein besonders sicherer Halt, insbesondere in Längsrichtung der Tragrohre, erreicht.

Grundsätzlich werden zwei Befestigungsmittel 14 im vorderen Bereich der Sitzkomponente 10 in die vorderen Rastausnehmungen 36 und zwei Befestigungsmittel 14 im hinteren Bereich der Sitzkomponente 10 in die hinteren Rastausnehmungen 38 eingerastet. Die Sitzkomponente 10 weist jedoch mehr als vier Rastausnehmungen 36, 38 auf, so dass auch mehr Befestigungsmittel 14 vorgesehen werden können und/oder insbesondere die Befestigungsmittel 14 auch abhängig von räumlichen Randbedingungen an verschiedenen Positionen angeordnet werden können.

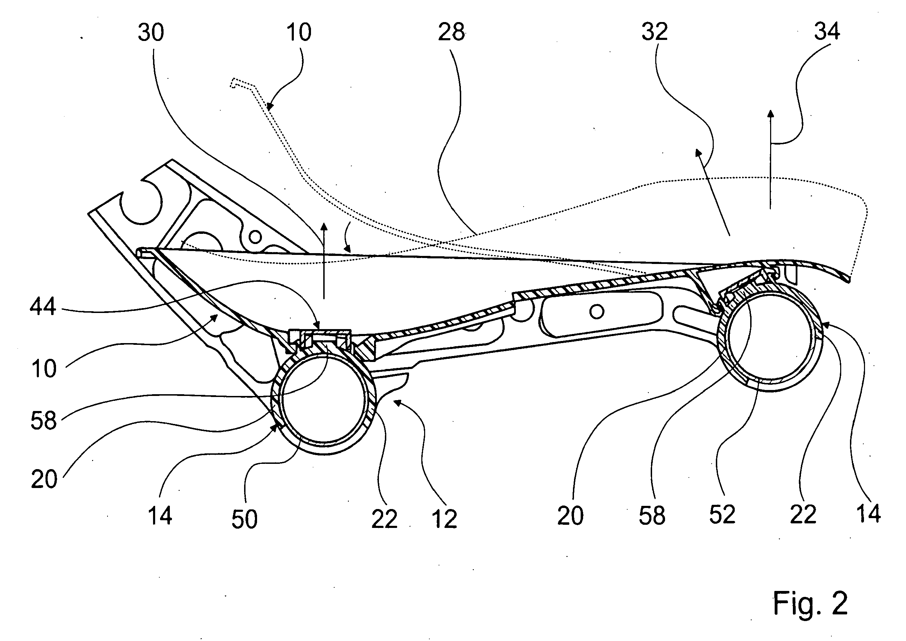

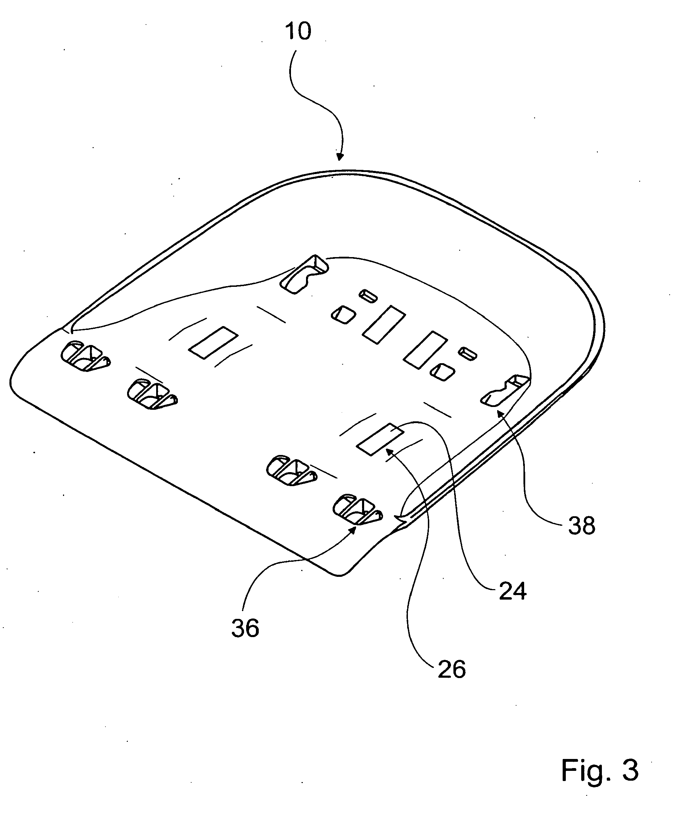

Die Sitzvorrichtung weist neben der Befestigungseinheit 12 zur Befestigung der Sitzkomponente 10 an den Tragrohren eine weitere Befestigungseinheit 26 auf, die zur Befestigung einer Polstereinheit 28 auf der Sitzkomponente 10 vorgesehen ist (Figuren 2 und 3). Die Befestigungseinheit 26 umfasst auf einer Oberseite der Sitzkomponente 10 befestigte Klettmittel 24, die mit an der Polstereinheit 28 befestigten, nicht näher dargestellten Klettmitteln im montierten Zustand zusammenwirken. Die Befestigungseinheit 12 der Sitzkomponente 10 erfordert im montierten Zustand eine Demontagekraft in Hauptdemontagerichtungen 30, 32 der Sitzkomponente 10, die um ca. 50% größer ist als eine erforderliche Demontagekraft in eine Hauptdemontagerichtung 34 der Befestigungseinheit 26 der Polstereinheit 28, in welcher erfahrungsgemäß in der Regel die Polstereinheit 28 von der Sitzkomponente 10 entfernt wird. Die Hauptdemontagerichtungen 30, 32 der Sitzkomponente 10 ergeben sich dadurch in welche Richtung die Rastmittel 20, 22 bei der Demontage im Wesentlichen gleichmäßig ausgelenkt werden und somit in welche Richtung die Befestigungsmittel 14 mit einer kleinstmöglichen Kraft von den Tragrohren entkoppelt werden können.

Ferner geht die Erfindung von der Erkenntnis aus, dass die Polstereinheit 28 grundsätzlich im vorderen Bereich der Sitzkomponente 10 abgezogen wird. Die Sitzkomponente 10 ist aufgrund dessen im vorderen Bereich in der Weise ausgestaltet, dass die vorderen Befestigungsmittel 14 im montierten Zustand eine Hauptdemontagerichtung 32 aufweisen, die einen Winkel ungleich Null, vorzugsweise größer als 5° und besonders bevorzugt größer als 10° zur Hauptdemontagerichtung 34 der Polstereinheit 28 einschließt (Figur 2).

Die vorderen und die hinteren Befestigungsmittel 14 weisen im montierten Zustand differierende Hauptdemontagerichtungen 30, 32 auf bzw. Hauptdemontagerichtungen 30, 32, die einen Winkel ungleich Null einschließen, so dass sich eine Montage und insbesondere eine Demontage ergibt, die sich aus mehreren differierenden Montage- bzw. Demontagebewegungen zusammensetzen.

Bei der Montage werden zuerst die Befestigungsmittel 14 mit ihren Rastmitteln 16, 18 in die Rastausnehmungen 36, 38 eingeführt, wobei die Rastmittel 16, 18 zueinander hin elastisch ausgelenkt und anschließend hinter Rändern der Rastausnehmungen 36 bzw. 38 einrasten. Zwischen den Rastmitteln 16, 18 weist das Befestigungsmittel 14 einen Fortsatz 58 auf, der im montierten Zustand zwischen Wandteile der Sitzkomponente 10 greift und zur Abstützung von Lagerkräften dient.

Anschließend werden die Rastmittel 16, 18 mittels eines von einer U-förmigen Klammer gebildeten Sicherungsmittels 44 in ihren Raststellungen gesichert, wie dies in Figur 2 im hinteren Bereich angedeutet ist. Hierfür werden die Sicherungsmittel 44 mit ihren Schenkeln von einer den Rastmitteln 20, 22 abgewandten Seite bzw. von einer Deckseite der Sitzkomponente 10 her zwischen die Rastmittel 16, 18 eingeführt (Figuren 5 und 6). Um das Sicherungsmittel 44 verliersicher zwischen den Rastmitteln 16, 18 zu sichern, weist dasselbe an Außenseiten seiner Schenkel von Fortsätzen gebildete Rastmittel 46, 48 auf, die beim Einführen des Sicherungsmittels 44 zwischen den Rastmitteln 16, 18 mit an Innenseiten der Rastmittel 16, 18 angeformten, von Fortsätzen gebildeten Rastmitteln 54, 56 zusammenwirken und hinter denselben einrasten.

Anschließend wird die Sitzkomponente 10 im Wesentlichen in waagerechter Ausrichtung, so dass die Hauptdemontagerichtung 32, die relativ zu der Sitzkomponente 10 eine feste Ausrichtung aufweist, im Wesentlichen vertikal ausgerichtet ist, mit den vorderen Befestigungsmitteln 14 im Wesentlichen in vertikaler Richtung auf das vordere Tragrohr gedrückt, wobei die Rastmittel 20, 22 radial nach außen elastisch ausgelenkt werden und anschließend mit jeweils einem Teilabschnitt ausgehend von der Sitzkomponente 10 in Richtung des vorderen Tragrohrs hinter demselben einrasten.

Anschließend wird die Sitzkomponente 10 um das vordere Tragrohr mit den hinteren Befestigungsmitteln 14 in Richtung des hinteren Tragrohrs geschwenkt. Die hinteren Befestigungsmittel 14 werden auf das hintere Tragrohr gedrückt, wobei die Rastmittel 20, 22 radial nach außen elastisch ausgelenkt werden und anschließend mit jeweils einem Teilabschnitt ausgehend von der Sitzkomponente 10 in Richtung des hinteren Tragrohrs hinter demselben einrasten. Eine Demontage erfolgt in umgekehrter Reihenfolge. Bei der Demontage der Befestigungsmittel 14 von der Sitzkomponente 10 werden die Rastmittel 16, 18 von Hand zueinander hin elastisch ausgelenkt.

### Bezugszeichen

- 10: Sitzkomponente
- 12: Befestigungseinheit
- 14: Befestigungsmittel
- 16: Rastmittel
- 18: Rastmittel
- 20: Rastmittel
- 22: Rastmittel
- 24: Klettmittel
- 26: Befestigungseinheit
- 28: Polstereinheit
- 30: Hauptdemontagerichtung
- 32: Hauptdemontagerichturig
- 34: Hauptdemontagerichtung
- 36: Rastausnehmung
- 38: Rastausnehmung
- 40: Mittel
- 42: Grundkörper
- 44: Sicherungsmittel
- 46: Rastmittel
- 48: Rastmittel
- 50: Korrespondenzbauteil
- 52: Korrespondenzbauteil
- 54: Rastmittel
- 56: Rastmittel
- 58: Fortsatz

## Patentansprüche

1. Sitzvorrichtung, insbesondere Flugzeugsitzvorrichtung, mit wenigstens einem Sitzboden (10) und einer Befestigungseinheit (12) zum Befestigen des Sitzbodens (10),
wobei die Befestigungseinheit (12) wenigstens ein Befestigungsmittel (14) mit wenigstens einem ersten Rastmittel (20, 22) aufweist, das zur Befestigung des Sitzbodens (10) durch Herstellung einer Rastverbindung zwischen dem Befestigungsmittel (14) und einem von einem Trägerbauteil zur Aufnahme von Abstützkräften des Sitzbodens (10) gebildeten Korrespondenzbauteil (50, 52) vorgesehen ist,
**dadurch gekennzeichnet,**
**dass** das Befestigungsmittel (14) ein zweites, sich vom ersten Rastmittel (20, 22) unterscheidendes Rastmittel (16, 18) aufweist, mittels dessen im montierten Zustand das Befestigungsmittel (14) an dem Sitzboden (10) befestigt ist.

2. Sitzvorrichtung nach Anspruch 1,
**dadurch gekennzeichnet,**
**dass** das Befestigungsmittel (14) zumindest teilweise aus Kunststoff hergestellt ist.

3. Sitzvorrichtung nach einem der vorhergehenden Ansprüche,
**gekennzeichnet durch**
eine Befestigungseinheit (26) zur Befestigung einer Polstereinheit (28), wobei die Befestigungseinheit (12) des Sitzbodens (10) eine Demontagekraft in wenigstens eine Hauptdemontagerichtung (30, 32) des Sitzbodens (10) erfordert, die um mindestens 20% größer ist als eine erforderliche Demontagekraft in wenigstens eine Hauptdemontagerichtung (34) der Befestigungseinheit (26) der Polstereinheit (28).

4. Sitzvorrichtung nach einem der vorhergehenden Ansprüche,
**dadurch gekennzeichnet,**
**dass** die Befestigungseinheit (12) zumindest zwei Befestigungsmittel (14) aufweist, die im montierten Zustand differierende Hauptdemontagerichtungen (30, 32) aufweisen.

5. Sitzvorrichtung nach einem der vorhergehenden Ansprüche,
**dadurch gekennzeichnet,**
**dass** die Befestigungseinheit (12) zumindest zwei baugleiche Befestigungsmittel (14) aufweist.

6. Sitzvorrichtung nach einem der vorhergehenden Ansprüche,
**dadurch gekennzeichnet,**
**dass** das Befestigungsmittel (14) zumindest zwei einen C-förmigen Aufnahmebereich bildende Rastarme aufweist.

7. Sitzvorrichtung nach einem der vorhergehenden Ansprüche,
**dadurch gekennzeichnet,**
**dass** das Befestigungsmittel (14) zumindest einen widerhakenförmigen Rastarm aufweist.

8. Sitzvorrichtung nach einem der vorhergehenden Ansprüche,
**dadurch gekennzeichnet,**
**dass** der Sitzboden (10) zumindest eine Rastausnehmung (36, 38) aufweist.

9. Sitzvorrichtung nach einem der vorhergehenden Ansprüche,
**gekennzeichnet durch**
wenigstens ein zumindest im montierten Zustand am Befestigungsmittel (14) angeordnetes Mittel (40), das einen höheren Reibwert aufweist als ein Grundkörper (42) des Befestigungsmittels (14).

10. Sitzvorrichtung nach einem der vorhergehenden Ansprüche,
**gekennzeichnet durch**
wenigstens ein Sicherungsmittel (44), das dazu vorgesehen ist, wenigstens ein Rastmittel (16, 18) in seiner Raststellung zu halten.

11. Sitzvorrichtung nach Anspruch 10,
**dadurch gekennzeichnet,**
**dass** das Sicherungsmittel (44) wenigstens ein Rastmittel (46, 48) aufweist.

12. Sitz, insbesondere Flugzeugsitz, mit einer Sitzvorrichtung nach einem der Ansprüche 1 bis 11.

## Claims

1. Seating apparatus, in particular aircraft seating apparatus, with at least one seat base (10) and a fastening unit (12) for fastening the seat base (10), the fastening unit (12) having at least one fastening means (14) with at least one first latching means (20, 22) which is provided for fastening the seat base (10) by establishing a latching connection between the fastening means (14) and a corresponding component (50, 52) formed by a support component for absorbing supporting forces of the seat base (10), **characterized in that** the fastening means (14) has a second latching means (16, 18) which differs from the first latching means (20, 22) and by means of which, in the fitted state, the fastening means (14) is fastened to the seat base (10).

2. Seating apparatus according to Claim 1, **characterized in that** the fastening means (14) is at least partially made of plastic.

3. Seating apparatus according to one of the preceding claims, **characterized by** a fastening unit (26) for fastening an upholstery unit (28), the fastening unit (12) of the seat base (10) requiring a removal force in at least one main removal direction (30, 32) of the seat base (10) which is by at least 20% greater than a required removal force in at least one main removal direction (34) of the fastening unit (26) of the upholstery unit (28).

4. Seating apparatus according to one of the preceding claims, **characterized in that** the fastening unit (12) has at least two fastening means (14) which, in the fitted state, have differing main removal directions (30, 32).

5. Seating apparatus according to one of the preceding claims, **characterized in that** the fastening unit (12) has at least two structurally identical fastening means (14).

6. Seating apparatus according to one of the preceding claims, **characterized in that** the fastening means (14) has at least two latching arms forming a C-shaped receiving region.

7. Seating apparatus according to one of the preceding claims, **characterized in that** the fastening means (14) has at least one latching arm in the shape of a barbed hook.

8. Seating apparatus according to one of the preceding claims, **characterized in that** the seat base (10) has at least one latching recess (36, 38).

9. Seating apparatus according to one of the preceding claims, **characterized by** at least one means (40) which, at least in the fitted state, is arranged on the fastening means (14) and has a higher friction coefficient than a basic body (42) of the fastening means (14).

10. Seating apparatus according to one of the preceding claims, **characterized by** at least one securing means (44) which is provided in order to retain at least one latching means (16, 18) in its latching position.

11. Seating apparatus according to Claim 10, **characterized in that** the securing means (44) has at least one latching means (46, 48).

12. Seat, in particular aircraft seat, with a seating apparatus according to one of Claims 1 to 11.

## Revendications

1. Dispositif de siège, en particulier dispositif de siège d'aéronef, comportant au moins un fond de siège (10) et un ensemble de fixation (12) pour fixer le fond de siège (10),
l'ensemble de fixation (12) comprenant au moins un moyen de fixation (14) doté d'au moins un premier moyen d'encliquetage (20, 22) qui est prévu pour la fixation du fond de siège (10) au moyen de la réalisation d'une liaison par encliquetage entre le moyen de fixation (14) et un composant correspondant (50, 52) formé d'un composant de support pour la réception de forces d'appui du fond de siège (10),
**caractérisé en ce que**
le moyen de fixation (14) comprend un deuxième moyen d'encliquetage (16, 18), différent du premier moyen d'encliquetage (20, 22), au moyen duquel deuxième moyen d'encliquetage (16, 18) le moyen de fixation (14) est fixé au fond de siège (10) dans l'état monté.

2. Dispositif de siège selon la revendication 1,
**caractérisé en ce que**
le moyen de fixation (14) est fabriqué au moins partiellement en plastique.

3. Dispositif de siège selon l'une quelconque des revendications précédentes,
**caractérisé par**
un ensemble de fixation (26) pour la fixation d'un ensemble de rembourrage (28), l'ensemble de fixation (12) du fond de siège (10) nécessitant, dans au moins une direction principale de démontage (30, 32) du fond de siège (10), une force de démontage qui est supérieure d'au moins 20% à une force de démontage nécessaire dans au moins une direction principale de démontage (34) de l'ensemble de fixation (26) de l'ensemble de rembourrage (28).

4. Dispositif de siège selon l'une quelconque des revendications précédentes,
**caractérisé en ce que**
l'ensemble de fixation (12) comprend au moins deux moyens de fixation (14) qui possèdent différentes directions principales de démontage (30, 32) dans l'état monté.

5. Dispositif de siège selon l'une quelconque des revendications précédentes,
**caractérisé en ce que**
l'ensemble de fixation (12) comprend au moins deux moyens de fixation (14) de construction identique.

6. Dispositif de siège selon l'une quelconque des revendications précédentes,
**caractérisé en ce que**
le moyen de fixation (14) comprend au moins deux bras d'encliquetage formant une région de réception en forme de C.

7. Dispositif de siège selon l'une quelconque des revendications précédentes,
**caractérisé en ce que**
le moyen de fixation (14) comprend au moins un bras d'encliquetage en forme de barbillon.

8. Dispositif de siège selon l'une quelconque des revendications précédentes,
**caractérisé en ce que**
le fond de siège (10) comprend au moins un évidement d'encliquetage (36, 38).

9. Dispositif de siège selon l'une quelconque des revendications précédentes,
**caractérisé par**
au moins un moyen (40) disposé au le moyen de fixation (14) au moins dans l'état monté, lequel moyen (40) possède un coefficient de frottement plus élevé que celui d'un corps de base (42) du moyen de fixation (14).

10. Dispositif de siège selon l'une quelconque des revendications précédentes,
**caractérisé par**
au moins un moyen de fixation (44) qui est prévu pour maintenir au moins un moyen d'encliquetage (16, 18) dans sa position d'encliquetage.

11. Dispositif de siège selon la revendication 10,
**caractérisé en ce que**
le moyen de fixation (44) comprend au moins un moyen d'encliquetage (46, 48).

12. Siège, en particulier siège d'aéronef, comportant un dispositif de siège selon l'une quelconque des revendications 1 à 11.
